# EUROPEAN PATENT APPLICATION

(11) **EP 1 878 681 A1**
(43) Date of publication of application: **16.01.2008**
(21) Application number: 07112206.3
(22) Date of filing: 11.07.2007
(51) Int. Cl.: B65H 39/04, G03G 15/00, B65H 29/60

(54) **Parallel printing system**

(30) Priority: 13.07.2006 US 485870
(71) Applicant: Xerox Corporation, Rochester, New York 14644 (US)
(72) Inventor: Moore, Steven R., Pittsford, NY 14534 (US)
(74) Representative: Grünecker, Kinkeldey, Stockmair & Schwanhäusser Anwaltssozietät

(57) **Abstract**

Disclosed is a print media interposer system and method. The print media interposer system (40) comprises two or more interposer modules (52;54;56;58), one or more interface modules (60), and a controller (42). The interposer modules are adapted to receive one or more print media input stacks (90;92;96) from one or more printing systems (68;76;84). Subsequently, the print media interposer system merges the received print media input stacks in a predetermined sequence.

## Description

### BACKGROUND

The present disclosure relates to a xerographic printing system. More specifically, it relates to a printing system which includes an interposer to compile the outputs of multiple stand-alone printing systems. However, it is to be appreciated that the present exemplary embodiment is also amenable to other like applications.

Cluster printing systems provide a document production system wherein multiple printers are combined into a 'virtual' printer via job splitting software. To compile the printed output of the multiple printers, a user must manually recombine the outputs. Disadvantages associated with this type of manual system include a relatively slow compilation process and the opportunity for errors during the compilation stage.

Other approaches to provide document production systems including multiple printers are integrated printing systems. These integrated printing systems physically combine multiple printers via media paths including various nips and rollers. The print media is routed from the image marking areas of the individual printing modules to a common media path highway. The common media path highway integrates a sheet feeder system/module and a finishing system/module. A disadvantage associated with an integrated printing system, as described above, is the need to simultaneously control multiple printing modules and the various media paths. As more printing modules are integrated, the complexity of the overall document production system. Consequently, a sophisticated controller system becomes necessary to schedule operations for each printing module and cope with unplanned events such as jams, shutdowns, printer dead cycling, etc.

This disclosure provided a parallel printing system which includes an interposer to integrate the outputs of multiple stand alone printing systems.

### BRIEF DESCRIPTION

A print media interposer system is disclosed. The print media interposer system comprises two or more interposer modules adapted to receive one or more print media input stacks, the interposer modules operatively connected to a print media path adapted to receive print media from the print media input stacks; one or more interface modules, the interface modules operatively connected to the two or more interposer modules; and a controller operatively connected to the two or more interposer modules and the one or more interface modules. The controller is configured to control the sequencing of print media sheets from the print media input stacks to the one or more interface modules, and the controller is configured to generate a command to transport one or more print media stacks produced by one or more printing systems to predetermined interposer print media stack inputs, wherein the print media interposer system is configured to merge the received print media input stacks in a predetermined sequence and output the merged print media to a post print media handling system.
In one embodiment of the print media interposer system according to claim 8, the image quality module further comprises:
a scanner, and
one or more periodic calibration target files associated with the two or more printing systems, wherein the scanner output and the one or more periodic calibration target files control set points associated with the one or more printing systems' total response curves.
In a further embodiment of the print media interposer system according to claim 3, the two or more printing systems comprises:
a monochrome printing system; and
a color printing system.
In a further embodiment the print media interposer system according to claim 3, further comprises:
a graphical user interface operatively connected to the controller, the graphical user interface configured to command a user to transport one or more print media stacks from the two or more printing systems to one or more interposer module stack inputs.
In a further embodiment the post print media handling system comprises a print media finishing module.
In a further embodiment the print media interposer system is configured to read one or more traveler sheets associated with the print media input stacks produced by the one or more printing systems.
In a further embodiment the traveler sheets identify the contents of the print media input stack below the traveler sheet.
In a further embodiment the traveler sheets identify the document job ID and/or the destination interposer stack input.

A method of executing a document job is disclosed. The method comprises receiving a first document print job in a controller, the controller generating a first printing system print job and generating a second printing system print job, wherein the first document print job is divided to generate first and second printing system print jobs. The controller communicates the first printing system print job to the first printing system and communicates the second printing system print job to the second printing system; the first printing system printing the first printing system print job and outputting the first printing system print job printed documents to a first output stacker operatively connected to the first printing system. The second printing system prints the second printing system print job and outputs the second printing system print job printed documents to a second output stacker operatively connected to the second printing system. The controller commands a print media stack transport system to transport the first printing system print job printed documents from the first output stacker to an interposer first stack input; and the controller commands a print media stack transport system to transport the second printing system print job printed documents from the second output stacker to an interposer second stack input; and the controller commands the interposer system to assemble the first document print job from the first and second stack inputs, wherein the printed sheets associated with the first and second stack inputs are selectively merged and routed to create a printed document stream representative of the first document print job.
In a further embodiment the method further comprises:
selectively routing predetermined print media associated with the first and second stack inputs to a purge module operatively connected to the interposer system, and selectively purging the predetermined print media.
In a further embodiment the method further comprises:
outputting the first document print job to a print media finishing module operatively connected to the interposer system.
In a further embodiment the print media finishing module comprises a book binder.

A xerographic interposer system is disclosed. The xerographic interposer system comprising two or more interposer modules adapted to receive one or more print media input stacks, the interposer modules operatively connected to a print media path adapted to receive print media from the print media input stacks; one or more interface modules, the interface modules operatively connected to the two or more interposer modules; a controller operatively connected to the two or more interposer modules and the one or more interface modules, the controller configured to control the sequencing of print media sheets from the print media input stacks to the one or more interface modules, and the controller configured to generate a command to transport one or more print media stacks produced by one or more printing systems to predetermined interposer print media stack inputs. Two or more printing systems are operatively connected to the controller; and a print media stack transport system is operatively connected to the two or more printing systems and the controller, wherein the print media stack transport system transports print media stacks from the two or more printing systems to two or more interposer modules, and the print media interposer system is configured to merge the received print media input stacks in a predetermined sequence and output the merged print media to a post print media handling system.

### BRIEF DESCRIPTION OF THE DRAWINGS

FIGURE 1 is an illustration of a printing system according to an exemplary embodiment of this disclosure;

FIGURE 2 is an illustration of a printing system according to another exemplary embodiment of this disclosure;

FIGURE 3 is an illustration of a printing system according to another exemplary embodiment of this disclosure;

FIGURE 4A and FIGURE 4B illustrate a method of document production according to an exemplary embodiment of this disclosure;

FIGURE 5 is a flow chart illustrating a document production method according to an exemplary embodiment of this disclosure; and

FIGURE 6 illustrates a printing system according to another embodiment of this disclosure.

### DETAILED DESCRIPTION

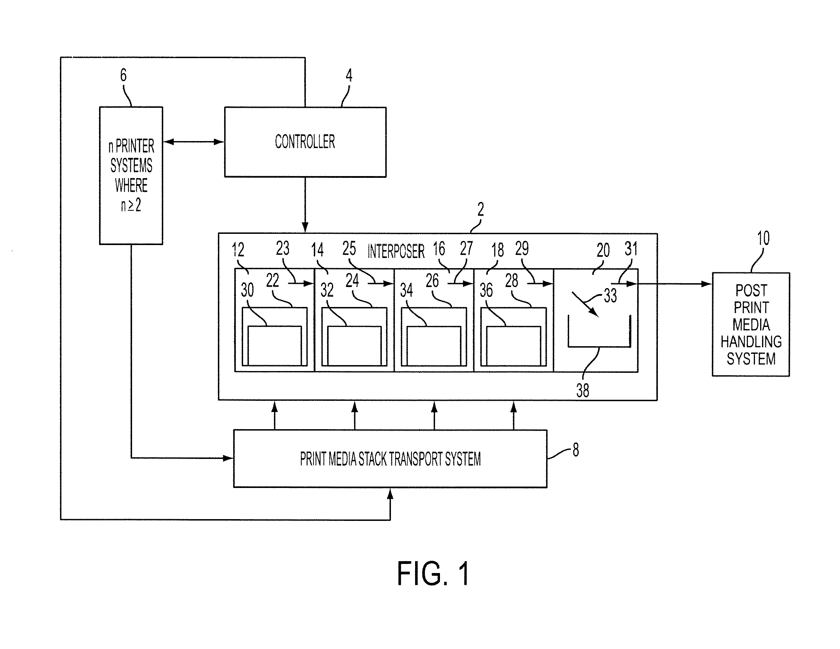

With reference to FIGURE 1, illustrated is a printing system according to an exemplary embodiment of this disclosure. The printing system includes an interposer **2,** a controller **4,** n printing systems where n ≥ 2 **6,** a print media stack transport system **8** and a post print media handling system **10.**

The interposer **2** includes multiple interposer modules **12, 14, 16** and **18.** Interposer module **12** includes an interposer module print media input **22** and corresponding interposer module print media input stack **30.** Inter poser module **14** includes an interposer module print media input **24** and corresponding interposer module print media input stack **32.** Interposer module **16** includes an interposer module print media input **26** and corresponding interposer module print media input stack **34.** Interposer module **18** includes an interposer module print media input **28** and corresponding interposer module print media input stack **36.** The fourth interposer **18** output is operatively connected to the input of an interface/purge module **20** which includes a print media output path operatively connected to the post print media handling system **10,** and a print media purge path **33** which routes purged print media to a purge output stack **38.**

With continuing reference to FIGURE 1, the exemplary printing system illustrated includes a communication interface between the controller **4** and the interposer system **2,** a communication interface between the n printing systems **6** and the controller **4,** a communication interface between the n printing systems **6** and the print media stack transport system **8,** and a communication interface between the controller **4** and the print media stack transport system **8.** In addition, the print media stack transport system **8** is operatively connected to the interposer module system **2** as indicated by the arrows from the print media stack transport system **8** to the interposer system **2.** Each arrow represents a print media stack delivery to a respective interposer module print media stack input.

In operation, the printing system illustrated in FIGURE 1 receives a document print job via the controller **4.** The controller **4** assigns each document sheet of the document print job to one of the n printing systems. For example, assuming the document print job includes 100 sequential sheets of printed media, and the system includes a first and second printing system. The controller may assign the first 50 pages of the print job to the first printing system and the last 50 pages of the print job to the second printing system.

Subsequently, the controller **4** communicates the first printing system print job to the first printing system, and communicates the second printing system print job to the second printing system. The printing systems print their respective sheets and output the printed sheets to a sheet stacking output. After completion of their respective print jobs, the first and second printing systems communicate to the controller **4** and/or the print media stack transport system **8,** the completion of the print jobs.

At this point, the print media stack transport system **8** transports the first printing system output stack to the interposer **2,** or more specifically an interposer module print media input, such as interposer module print media input **22, 24, 26** or **28.** Furthermore, the print media stack transport system **8** transports the second printing system output stack to the interposer **2,** or more specifically an interposer module print media input such as interposer module print media input **22, 24, 26** or **28.** However, the first and second printing system output stacks are transported to different interposer module print media inputs for further processing by the interposer system **2.**

For purposes of illustrating the operation of the interposer system **2** from this point, assume the output stack of the first printing system is transported to the first interposer module print media input **22,** thereby positioning the first printing system output stack as the first interposer module print media input stack **30.** Furthermore, assume the output stack of the second printing system is transported to the second interposer module print media input **24,** thereby positioning the second printing system output stack as the second interposer module print media input stack **32.** With the printing system output stacks positioned, as discussed above, printed sheets 1-50 of the original print job are located within the first interposer module **12** and printed sheets 51-100 of the original print job are located within the second interposer module **14.**

To assemble or compile the printed sheets, the interposer system sequentially processes the first interposer print media input stack by routing these printed sheets via interposer module print media paths **23, 25, 27** and **29.** The printed media sheets are subsequently routed to the post print media handling system **10** via the interface/purge module print media output **31.** Subsequent to the sequential processing of printed sheets 1-50, printed sheets 51-100 are sequentially routed via interposer module print media paths **25, 27** and **29.** Printed sheets 51-100 are then routed to the post print media handling system **10** via the interface/purge module print media output **31.**

At this point, the original print job is completed, provided any post handling of the printed sheets is finished.

The printing system illustrated in FIGURE 1 and described heretofore, provides a means of integrating the output of multiple printing systems, whereby the printed media of the multiple printing systems is compiled and/or merged by an interposer system as disclosed. A print media transport system provides a means for integrating the multiple printing systems and the interposer system.

Other variations and modifications of the printing system described heretofore are described below.

With continuing reference to FIGURE 1, an optional interface/purge module **20** is illustrated. The interface/purge module provides an interface from the interposer modules to the post print media handling system **10.** In addition, the interface/purge module provides a means for discarding unneeded media sheets which are included in the interposer module print media input stacks. For example, one exemplary embodiment of this disclosure includes a traveler sheet printed by each printing system and located at the top of the respective printing system output stack. The traveler sheet identifies one or more attributes associated with the print stack. For example, the document print job ID, the interposer module destination, etc. Once the print stack and associated traveler sheet have been placed in the appropriate interposer module input, the traveler sheet is processed by the interposer system and ejected via the interface/purge module **20.**

Another exemplary embodiment of the printing system illustrated in FIGURE 1, comprises 2, 3, 5, 6, or more interposer modules and 2, 3, 4, 5, 6, or more printing systems, where the printing systems are a combination of monochrome, color, etc. In addition, the document job processed by the controller **4** can be divided and assigned to printing systems based on the color content of a particular sheet or other marking attributes which must be performed by one or more specific printing systems. The output stacks of the printing systems may contain one or more printed media sheets in a predetermined order such as odd numbered pages, even numbered pages, or identical printed sheets for placement within a stream of sheets being merged and compiled by the interposer system.

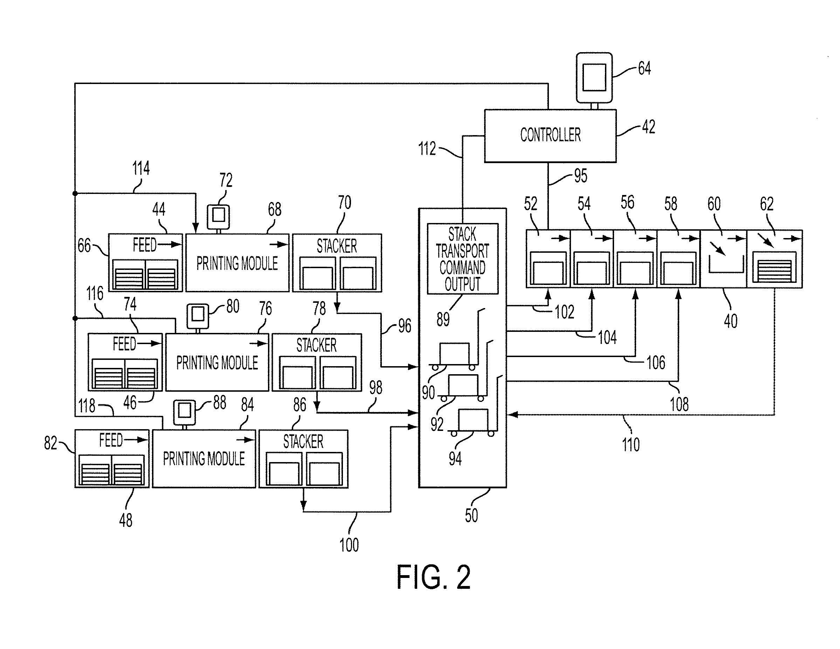

With reference to FIGURE 2, illustrated is another exemplary embodiment of this disclosure. The printing system includes an interposer system **40,** a controller **42,** a controller graphical user interface (GUI) **64,** a first printing system **44,** a second printing system **46,** a third printing system **48,** and a print media stack transport system **50.**

The interposer system **40** includes a first interposer module **52,** a second interposer module **54,** a third interposer module **56,** a fourth interposer module **58,** an interface/purge module **60** and an interposer print media output stacker **62.**

The first printing system includes a printing system sheet feeder **66,** a printing module **68** for image marking, an output stacker **70** and a GUI **72.**

The second printing system includes a printing system sheet feeder **74,** a printing module **76** for image marking, an output stacker **78** and a GUI **80.**

The third printing system includes a printing system sheet feeder **82,** a printing module **84** for image marking, an output stacker **86** and a GUI **88.**

The print media stack transport system **50** includes a stack transport command output **89,** a first print media stack cart **90,** a second print media stack cart **92** and a third media stack cart **94.**

With continuing reference to FIGURE 2, the exemplary printing system illustrated includes a communication interface **95** between the controller **42** and the interposer **40,** a communication interface **112** between the controller **42** and the print media stack transport system **50,** a communication interface **114, 116** and **118** between the controller **42** and the first printing system **44,** the second printing system **46** and the third printing system **48** respectively. In addition, the printing system illustrated in FIGURE 2 includes a print media flow path **96** from the first printing system **44** to the print media stack transport system **50,** a print media flow path **98** from the second printing system **46** to the print media stack transport system **50** and a print media flow path **100** from the third printing system **48** to the print media stack transport system **50.**

Print media flow **102, 104, 106** and **108** represent print media flow via the print media stack transport system **50** to interposer modules **52, 54, 56** and **58,** respectively. Print media flow **110** represents the optional print media flow from the interposer print media output stacker **62** via the print media stack transport system **50.**

In operation, the printing system illustrated in FIGURE 2 receives a document print job via the controller **4** or GUI **64.** The controller **4** and/or GUI **64** can be connected to a network (not shown) which provides the document print job file(s). The controller **4** assigns each document sheet of the document print job to one of the three printing systems **44, 46** and **48.** Subsequently, the controller **4** communicates a first printing system print job, a second printing system print job and a third printing system print job to respective printing systems **44, 46** and **48.**

The printing systems complete their assigned/communicated print jobs and produce print stacks at their respective output stackers **70, 78** and **86.**

The print media stack transport system transports the printing system output stacks from the output stackers **70, 78** and **86** to the appropriate interposer modules **52, 54, 56,** and **58.**

From this point, the interposer system **40** assembles the document print job in the appropriate sheet sequence and ejects any unnecessary sheets, such as a traveler sheet, via the interface/purge module. The assembled document print job is outputted from the interposer system **40** via the interposer print media output stacker **62.**

The assembled document print job can be optionally transported via the print media stack transport system **50** to a subsequent operation, for example, a finishing module or storage area, or another means of transporting the assembled document print job can be provided.

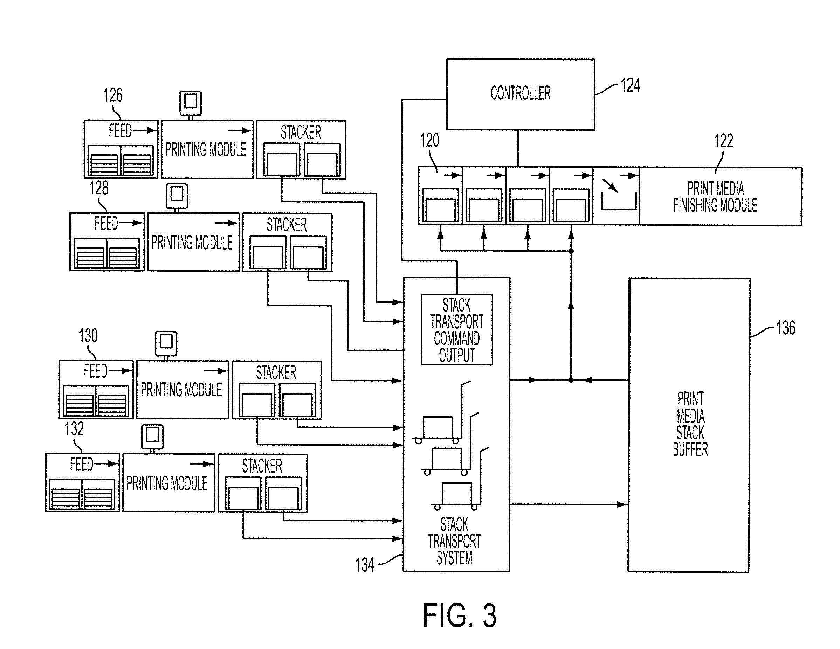

With reference to FIGURE 3, illustrated is another exemplary embodiment of this disclosure. The printing system includes an interposer system **120,** a controller **124,** a first printing system **126,** a second printing system **128,** a third printing system **130,** a fourth printing system **132,** a print media stack transport system **134,** and a print media stack buffer **136.**

In addition, a print media finishing module **122** is integrated with the interposer system **120.**

The operation of the printing system illustrated in FIGURE 3 is similar to the printing systems discussed with reference to FIGURE 1 and FIGURE 2. Notable differences include four printing systems, the integrated print media finishing module **122** and print media stack buffer **136.**

The print media stack buffer **136** provides an area to store print media output stacks from one or more of printing systems **126, 128, 130** and **132,** until the interposer system **120** has completed any previous document print jobs and/or is put into service. Furthermore, the print media stack buffer **136** provides a staging area for storing one or more print media stacks until all print media stacks required for assembly by the interposer system **120,** are completed by the printing systems **126, 128, 130** and **132.**

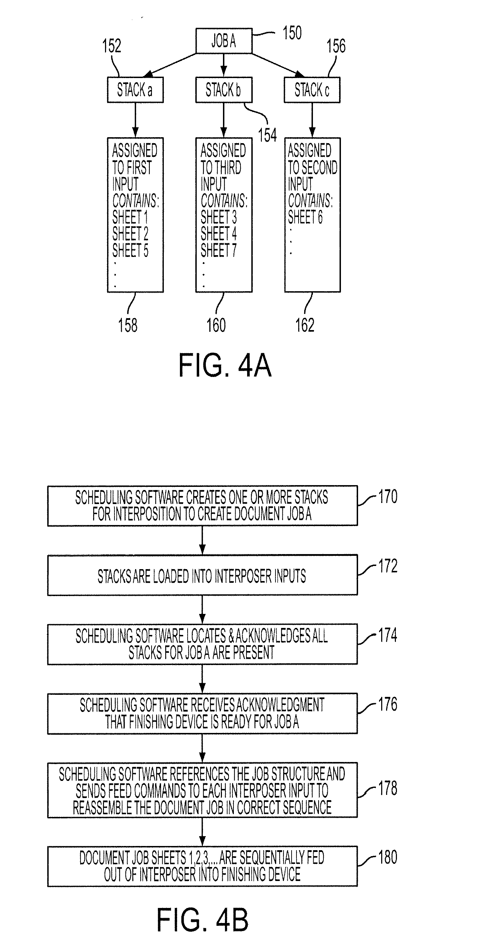

With reference to FIGURES 4A and 4B, illustrated are flow charts representing a method of document production according to an exemplary embodiment of this disclosure. The diagrams of FIGURE 4A and FIGURE 4B provide an example of the operation of an interposer system, as related to a document print Job A.

Initially, the document print Job A **150** is divided and assigned to one or more printing systems which produce stack a **152,** stack b **154,** and stack c 156. Subsequently, stack a **152** is assigned **158** to a first stack input of the interposer system, stack b **154** is assigned **160** to a third stack input of the interposer system, and stack c **156** is assigned **162** to a second input of the interposer system. As illustrated in FIGURE 4A, stack a includes sheet 1, sheet 2, sheet 5; stack b includes sheet 3, sheet 4 and sheet 7; and stack c includes sheet 6.

Subsequent to the loading of stack a, stack b and stack c, the interposer system merges sheets from the interposer stack inputs to assemble print Job A.

With reference to FIGURE 4B, illustrated is a flow chart representing the operation of an exemplary embodiment of this disclosure.

In operation, the scheduling software initially creates **170** one or more stacks for interposition to create a document Job A.

Next, the stacks are loaded **172** into interposer inputs.

Next, the scheduling software locates and acknowledges **174** all stacks for Job A are present.

Next, the scheduling software receives acknowledgement **176** that the finishing device is ready for Job A.

Next, the scheduling software references the job structure and sends 178 feed commands to each interposer input to reassemble the document job in correct sequence.

Finally, document job sheets 1, 2, 3, ... are sequentially fed **180** out of the interposer into the finishing device.

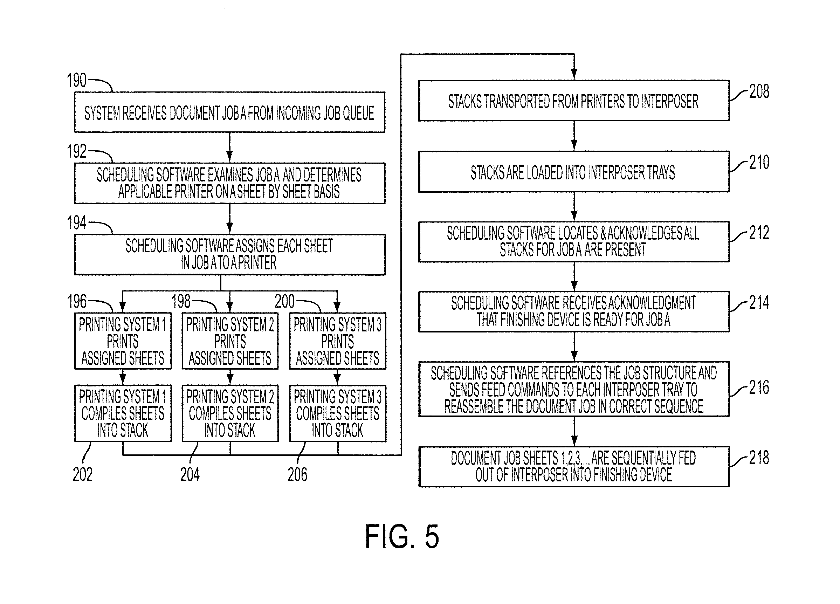

With reference to FIGURE 5, illustrated is another exemplary flow chart illustrating a document production method according to an exemplary embodiment of this disclosure.

Initially, the system receives **190** a document job from an incoming job queue.

Next, the scheduling software examines **192** Job A and determines the applicable printer or printing system on a sheet by sheet basis.

Subsequently, the scheduling software assigns **194** each sheet in Job A to a printer or printing system.

At this point, printing system 1 prints **196** its assigned sheets, printing system 2 prints **198** its assigned sheets and printing system 3 prints **200** its assigned sheets.

Next, printing system 1 compiles **202** its sheets into a stack, printing system 2 compiles **204** its sheets into a stack, and printing system 3 compiles 206 its sheets into a stack.

At this point, the stacks are transported **208** to the interposer system.

Next, the stacks are loaded **210** into interposer trays.

Next, the scheduling software locates and acknowledges **212** all stacks for Job A are present.

Next, the scheduling software receives **214** acknowledgement that the finishing device is ready for Job A.

Next, the scheduling software references the job structure and sends 216 feed commands to each interposer tray to reassemble the document job in correct sequence.

Finally, document job sheets 1, 2, 3, ... are sequentially fed **218** out of the interposer into the finishing device.

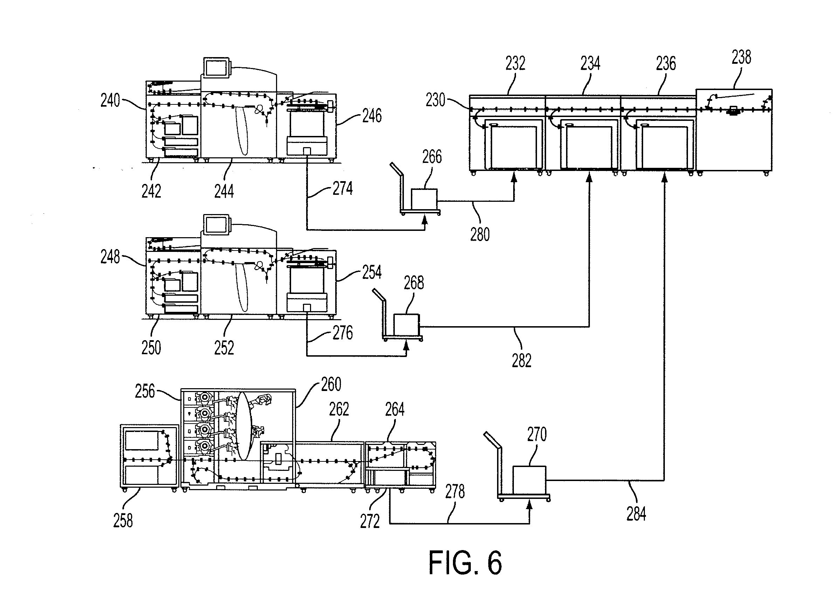

With reference to FIGURE 6, illustrated is another exemplary embodiment of a printing system according to this disclosure. The printing system includes an interposer system **230,** a first monochrome printing system **240,** a second monochrome printing system **248,** a color printing system **256,** a first print media stack cart **266,** a second print media stack cart **268** and a third print media stack cart **270.**

The interposer system includes a first interposer module **232,** a second interposer module **234,** a third interposer module **236** and a finishing/stacker module **238.**

The first monochrome printing system **240** includes a sheet feeder module **242,** a monochrome printing module **244** and a sheet output stacker **246.**

The second monochrome printing system **248** includes a sheet feeder module **250,** a monochrome printing module **252** and a sheet output stacker **254.**

The color printing system **256** includes a sheet feeder module **258,** a color printing module **260,** a duplex/interface module **262** and an output module 264. The output module **264** includes an output stack **272.**

As illustrated in FIGURE 6, the first print media stack cart **266** transports stacks from the first monochrome printing system **240** to the interposer system along print media flow paths **274** and **280.** The second print media stack cart **268** transports stacks from the second monochrome printing system **248** to the interposer system along print media paths **276** and **282.** The third print media stack cart 270 transports stacks from the color printing system 256 to the interposer system 230 along print media paths 278 and 284.

## Claims

1. A print media interposer system comprising:
two or more interposer modules adapted to receive one or more print media input stacks, the interposer modules operatively connected to a print media path adapted to receive print media from the print media input stacks;
one or more interface modules, the interface modules operatively connected to the two or more interposer modules; and
a controller operatively connected to the two or more interposer modules and the one or more interface modules, the controller configured to control the sequencing of print media sheets from the print media input stacks to the one or more interface modules, and the controller configured to generate a command to transport one or more print media stacks produced by one or more printing systems to predetermined
interposer print media stack inputs,
wherein the print media interposer system is configured to merge the received print media input stacks in a predetermined sequence and output the merged print media to a post print media handling system.

2. The print media interposer system according to claim 1, further comprising:
a purge module operatively connected to the two or more interposer modules, wherein the purge module is configured to selectively eject print media sheets from the one or more print media input stacks.

3. The print media interposer system according to claim 1, further comprising:
two or more printing systems operatively connected to the controller; and
a print media stack transport system operatively connected to the two or more printing systems and the controller, wherein the print media stack transport system transports print media stacks from the two or more printing systems to two or more interposer modules.

4. The print media interposer system according to claim 3, further comprising:
a print media stack buffer area, the buffer area operatively connected to the media stack transport system, wherein the buffer area stores print media stacks from the two or more printing systems.

5. The print media system according to claim 3, the print media stack transport system comprising:
one or more print media stack carts, wherein the print media stack carts transport print media stacks from the two or more printing systems to the two or more interposer modules.

6. The print media system according to claim 3, wherein the two or more printing systems comprises a first printing system and a second printing system, and the controller is configured to execute a print job by performing a method comprising:
receiving a first document job from a job queue;
assigning each document sheet of the first document job to the first printing system or the second printing system, wherein the first document job is divided into a first printing system print job and a second printing system print job;
communicating the first printing system print job to the first printing system and communicating the second printing system print job to the second printing system, the first printing system and second printing system communicating to the controller the completion of their respective print jobs;
commanding the print media stack transport system to transport the first printing system output stack to the interposer first stack input;
commanding the print media stack transport system to transport the second printing system output stack to the interposer second stack input; and
commanding the interposer modules to assemble the first print job from the interposer first and second stack inputs, wherein the printed document sheets associated with the first and second stack inputs are selectively merged and routed to create a printed document sheet sequence representative of the first document print job.

7. The print media interposer system according to claim 6, wherein the controller is configured to selectively route predetermined print media associated with the first and second stack inputs to the purge module and selectively purging the predetermined print media.

8. The print media interposer system according to claim 3, further comprising:
an image quality control module, wherein the image quality control module measures and controls the image quality of the two or more printing systems.

9. A method of executing a document job comprising:
receiving a first document print job in a controller, the controller generating a first printing system print job and generating a second printing system print job, wherein the first document print job is divided to generate the first and second printing system print jobs;
the controller communicating the first printing system print job to the first printing system and communicating the second printing system print job to the second printing system;
the first printing system printing the first printing system print job and outputting the first printing system print job printed documents to a first output stacker operatively connected to the first printing system;
the second printing system printing the second printing system print job and outputting the second printing system print job printed documents to a second output stacker operatively connected to the second printing system;
the controller commanding a print media stack transport system to transport the first printing system print job printed documents from the first output stacker to an interposer first stack input;
the controller commanding a print media stack transport system to transport the second printing system print job printed documents from the second output stacker to an interposer second stack input; and
the controller commanding the interposer system to assemble the first document print job from the first and second stack inputs, wherein the printed sheets associated with the first and second stack inputs are selectively merged and routed to create a printed document stream representative of the first document print job.

10. A xerographic interposer system comprising:
two or more interposer modules adapted to receive one or more print media input stacks, the interposer modules operatively connected to a print media path adapted to receive print media from the print media input stacks;
one or more interface modules, the interface modules operatively connected to the two or more interposer modules;
a controller operatively connected to the two or more interposer modules and the one or more interface modules, the controller configured to control the sequencing of print media sheets from the print media input stacks to the one or more interface modules, and the controller configured to generate a command to transport one or more print media stacks produced by one or more printing systems to predetermined interposer print media stack inputs;
two or more printing systems operatively connected to the controller; and
a print media stack transport system operatively connected to the two or more printing systems and the controller,
wherein the print media stack transport system transports print media stacks from the two or more printing systems to two or more interposer modules, and the print media interposer system is configured to merge the received print media input stacks in a predetermined sequence and output the merged print media to a post print media handling system.
